# EUROPEAN PATENT APPLICATION

(11) **EP 1 557 286 A1**
(43) Date of publication of application: **27.07.2005**
(21) Application number: 04388005.3
(22) Date of filing: 22.01.2004
(51) Int. Cl.: B42F 7/02, B42F 7/06, B31B 41/00, G11B 33/04

(54) **A protective sleeve for a disc-shaped recording medium, such as a compact disc**

(71) Applicant: 3L-Ludvigsen A/S, 5690 Tommerup (DK)
(72) Inventor: Luvigsen, Frits, 5690 Tommerup (DK)
(74) Representative: Jorgensen, Bjorn Barker

(57) **Abstract**

The protective sleeve (1) comprises four sheets (2, 3, 4, 5) of a flexible material. The sheets (2, 3, 4, 5) are arranged in layers on top of each other, each sheet (2, 3, 4, 5) having a top edge, an opposing bottom edge and two mutually opposed side edges connecting the top edges and bottom edges. Each sheet (2, 3, 4, 5) is attached to its respective adjacent sheet (s) at the bottom edges and at at least one of the two side edges so as to form a front pocket (7), a central pocket (8) and a back pocket (9). The central pocket (8) is open at the top edges and is adapted to contain a disc-shaped recording medium (10). The bottom of the central pocket (8), determining the depth into which the recording medium (10) may be inserted in the central pocket (8), is defined at a substantial distance (D) from the bottom edges of the sheets (2, 3, 4, 5).

## Description

The present invention relates to a protective sleeve for a disc-shaped recording medium, such as a compact disc, comprising four sheets of a flexible material, the sheets being arranged in layers on top of each other, each sheet having a top edge, an opposing bottom edge and two mutually opposed side edges connecting the top edges and bottom edges, each sheet being attached to its respective adjacent sheet(s) at the bottom edges and at at least one of the two side edges so as to form a front pocket, a central pocket and a back pocket, and the central pocket being open at the top edges and being adapted to contain said disc-shaped recording medium.

A protective sleeve of this art, though not intended for a disc-shaped recording medium, is known from WO 98/24640, which discloses a multi-pocket sleeve with three pockets. The sleeve is made up of a number of sheets and is used for a variety of paper recording applications. The side edge of the sleeve is provided with holes for inserting the sleeve in a sleeve holder. The sheets are of different sizes and are arranged in layers with the smallest as the front sheet, the second smallest as the second sheet etc. The bottoms of the pockets are situated at a common level.

US 5,595,798 discloses a foldable wallet for containing a disc such as a compact disc, wherein the wallet may be used for storing of the contents of an ordinary so-called compact disc jewel-case. The wallet contains five sheets of substantially identical size and shape providing two integral pockets on top of each other and a separate third pocket. The two integral pockets are adapted for containing a compact disc as well as a cover. The third pocket is arranged for containing another cover and may be used for closing the wallet.

It should be noted that the so called jewel-case is a well known hard cover for compact discs comprising a bottom part holding a not readily removable grafic back sheet and the compact disc, and a hinged cover holding a readily removable grafic front cover or booklet.

US 2,127,619 discloses a holder for holding groups of sheets, such as the chapters of a book. On one of their edges the sheets are provided with a key, which fits into a slot in the holder. The key is provided with a number of prolonged dovetail-shaped projections matching a number of prolonged projections in the slot so that the key may be easily inserted in the slot by pushing it into the slot and removed from the slot by displacement of the sleeve in a direction parallel to the edge provided with the key. This enables easy access to and browsing of the groups of sheets inserted in the holder.

It is a primary object of the present invention to provide a protective sleeve of the above-mentioned type, in which a disc-shaped recording medium, such as a compact disc, may be easily inserted and removed. A further object is to provide a protective sleeve, wherein several such sleeves in a practical manner may be inserted in a holder for easy access to and browsing of the recording media inserted in the sleeves.

To meet the primary object the protective sleeve is characterized in that the bottom of the central pocket, determining the depth into which the recording medium may be inserted in the central pocket, is defined at a substantial distance from the bottom edges of the sheets.

When the recording medium is inserted in the central pocket, the smaller depth of said pocket provides for a position of the recording medium in the central pocket, which is at a relatively small distance from said top edges of the sheets, thus making it easier for a user to pull the recording medium out of protective sleeve.

In an embodiment of the invention said distance is at least approximately 10 mm, preferably approximately 30 mm, and the disc-shaped recording medium projects in its position inserted in the central pocket over at least one of the two central sheets. Also, one of the two central sheets may be provided at its top edge with a flap for holding the recording medium in its position inserted in the central pocket, and the other of the two central sheets may be provided with a recess for easier removal of the recording medium from the central pocket. These features provide for a large area, in which a user may grasp the recording medium, without the recording medium being likely to fall out of the sleeve.

In another embodiment at least one of the sheets is manufactured from a transparent material, making a cover or any other graphic representation placed in one of the pockets visible through the sheet.

Furthermore, the sheets may be provided with substantially uniform and rectangular dimensions, and the sheets may be attached to respective adjacent sheets at both side edges in order to provide a sleeve, in which all three pockets have their opening at the top edges of the sheets.

In a preferred embodiment fulfilling the above further object the sleeve is provided at the bottom edges and/or the side edges with a fastening means for inserting the sleeve in a sleeve holder for holding several sleeves. The bottom part of the protective sleeve may be in the form of a key, which is provided with said fastening means in the form of a number of resilient projections. Thus, the bottom part of the protective sleeve constitutes a key fitting into a slot in the sleeve holder, which key is provided with said resilient projections matching a number of prolonged projections in the slot. Alternatively, the fastening means may be in the form of a number of holes matching a number of rings in the sleeve holder. Thus, the protective sleeve(s) may readily be inserted in and removed from the holder, while keeping a firm attachment of the sleeve(s) after insertion in the holder.

In another embodiment the protective sleeve is adapted to contain a front cover, a compact disc and a back cover of an ordinary jewel-case in the front pocket, the central pocket and the back pocket, respectively. This makes it possible to place a collection of recording media into a holder, making the collection easy to browse, the covers of each recording medium being visible through transparent sheets.

The invention will be explained in detail in the following by means of examples of embodiments with reference to the schematic drawing, in which
Fig. 1 is a front view of the protective sleeve according to the invention;
Fig. 2 is a cross sectional view taken along line II-II of Fig. 1;
Fig. 3 is a front view of a holder for insertion of the protective sleeve of Fig. 1; and
Fig. 4 is a cross sectional view taken along line IV-IV in Fig. 3 with a number of the protective sleeve of Fig. 1 inserted in the holder of Fig. 3.

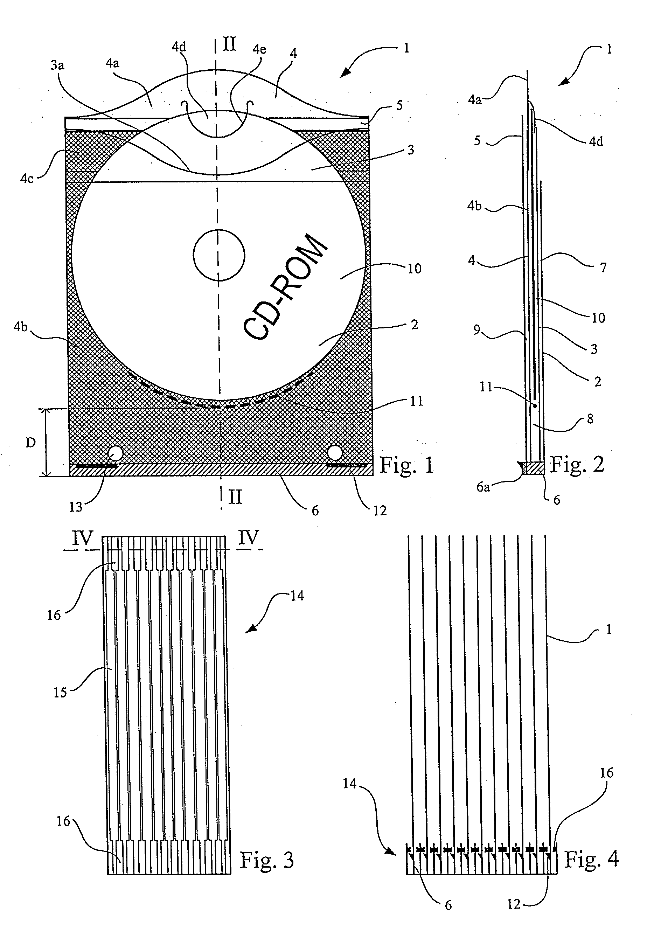

Fig. 1 and 2 show a protective sleeve in the form of a compact disc sleeve or cd sleeve 1 according to the invention. The cd sleeve 1 comprises a front sheet 2, a front central sheet 3, a back central sheet 4 and a back sheet 5, which are arranged in layers on top of each other as shown in Fig. 2. The sheets 2, 3, 4, 5 are made from a flexible, transparent plastics material, however the back central sheet 4 also comprises a part 4b made from a non-woven, flexible and soft plastics material. The sheets 2, 3, 4, 5 may comprise any other suitable material.

The sheets 2, 3, 4, 5 are attached to their respective neighbouring sheet(s) 2, 3, 4, 5 at their side edges by means of an adhesive or welding and at their bottom edges by means of a welding 6 so as to form a front pocket 7, a central pocket 8 and a back pocket 9 of the cd sleeve 1. The sheets 2, 3, 4, 5 may be attached to each other in any other suitable way. The pockets 7, 8, 9 are open at the top edges and the sheets are of substantially rectangular shape.

In Fig. 2 the respective distances between the sheets 2, 3, 4, 5 are exaggerated in order to accentuate the pockets 7, 8, 9. In reality, the sheets 2, 3, 4, 5 are located much closer or even in direct contact with each other. Also, the relative thickness of the welding 6 is distorted; in reality the relative thickness is much smaller than what is implied in Fig. 2.

The front pocket 7 is adapted to contain the substantially quadratic front cover or booklet (not shown) of an ordinary compact disc jewel-case, thus the front sheet 2 has a somewhat lower top edge compared to the top edges of the other sheets 3, 4, 5. Preferably, the front pocket 6 has a depth corresponding to the height of such an ordinary front cover. The front cover is visible through the transparent front sheet 2.

The central pocket 8 is adapted to contain a recording medium in the form of an ordinary compact disc 10. In order to ease removal of the compact disc 10 from the central pocket 8, the front central sheet 3 and the back central sheet 4 are attached to each other by means of a welding 11 in an arc-shaped line matching the lower edge of the compact disc 10, the welding 11 thus forming the bottom of the central pocket 8. The welding 11 is located at a substantial distance D from the bottom edge of the cd sleeve 1, the distance D providing a projection of the compact disc 10 over the top edge of the front central sheet 3 and the front sheet 2. Attachment of the sheets 3, 4 to each other may be of any other suitable kind and shape, or the offset bottom of the central pocket 8 may be provided in any other way.

The front central sheet 3 is provided with a recess 3a extending over the entire top edge of the sheet 3. This renders part of the compact disc 10 visible, making it easy for a user to slide the compact disc 10 upwards by means of e.g. a thumb, thus pulling the compact disc 10 out of the cd sleeve 1.

As mentioned in the above, the back central sheet 4 comprises two parts, a smaller transparent top part 4a and a larger, non-woven and softer lower part 4b, the parts 4a, 4b being attached to each other by means of an adhesive, a welding or the like in the area 4c. The lower part 4b is adapted to protect the more vulnerable back part of the compact disc 10. The top part 4a comprises a flap 4d provided by a substantially semicircular cut 4e in the material of the top part 4a. This flap 4d may be used to secure the compact disc 10 in the cd sleeve 1 when the flap 4d is in the position shown in Figs. 1 and 2. The flap 4d may be released in an easy manner by gently pushing the top part 4a. Thus, the flap 4d provides for easy securing and release of the compact disc 10 in the central pocket 8.

The back pocket 9 is adapted to contain the rectangular back cover (not shown) of an ordinary compact disc jewel-case. Preferably, the back pocket 9 has a depth corresponding to the height of an ordinary jewel-case back cover. This makes it possible to watch the back cover through the transparent back sheet 5.

The cd sleeve 1 is provided with attachment means for securing it in a holder. The welding 6 is reinforced by a strip 6a of a plastics material, which is welded onto the front sheet 2 along the bottom edge thereof. Areas at the upper side edge of the strip 6a are left unwelded to the back sheet 5, whereby these areas provide resilient projections 12 made on the side of the welding 6, the projections 12 being tapered in the direction of the bottom edge of the cd sleeve 1. The reinforced welding provides a key insertable in a slot and projections 12 may then act as barbs. The attachment means further comprise holes 13.

In Fig. 3 an example of a holder 14 for holding several cd sleeves 1 is shown. A number of slots 15 are disposed in the holder 14. At their respective ends the slots 15 are provided with prolonged lateral projections 16.

In Fig. 4 a number of cd sleeves 1 are fitted into the holder 14 of Fig. 3, the respective weldings 6 of the cd sleeves 1 forming keys fitting into the slots 15. The welding of the respective cd sleeves 1 may be pushed into the respective slots 15, the respective tapered resilient projections 12 clicking into a fit beyond the lateral projections 16 of the holder 14. In succession to a small lateral movement in a direction parallel to their keys and past the projections 16 the respective cd sleeves 1 may be pulled individually out of the holder 14. A reinforcing strip and projections 12 may be provided on one side or on both sides of the respective cd sleeves 1.

## Claims

1. A protective sleeve (1) for a disc-shaped recording medium (10), such as a compact disc, comprising four sheets (2, 3, 4, 5) of a flexible material,
the sheets (2, 3, 4, 5) being arranged in layers on top of each other, each sheet (2, 3, 4, 5) having a top edge, an opposing bottom edge and two mutually opposed side edges connecting the top edges and bottom edges, each sheet (2, 3, 4, 5) being attached to its respective adjacent sheet(s) (2, 3, 4, 5) at the bottom edges and at at least one of the two side edges so as to form a front pocket (7), a central pocket (8) and a back pocket (9), and
the central pocket (8) being open at the top edges and being adapted to contain said disc-shaped recording medium (10), **characterized in**
**that** the bottom of the central pocket (8), determining the depth to which the recording medium (10) may be inserted in the central pocket (8), is defined at a substantial distance (D) from the bottom edges of the sheets (2, 3, 4, 5).

2. A protective sleeve (1) according to claim 1, **characterized in that** said distance (D) is at least approximately 10 mm, preferably approximately 30 mm, and that the disc-shaped recording medium (10) in its position inserted in the central pocket (8) projects over the top edge of one of the two central sheets (3, 4).

3. A protective sleeve (1) according to claim 1 or 2, **characterized in that** one (4) of the two central sheets (3, 4) at its top edge is provided with a flap (4d) for holding the recording medium (10) in its position inserted in the central pocket 8 and that the other (3) of the two central sheets (3, 4) is provided with a recess (3a) for easier removal of the recording medium (10) from the central pocket (8).

4. A protective sleeve (1) according to one of the claims 1 to 3, **characterized in that** at least one of the sheets (2, 3, 4, 5) is manufactured from a transparent material.

5. A protective sleeve (1) according to one of the claims 1 to 4, **characterized in that** the sheets (2, 3, 4, 5) are provided with substantially rectangular dimensions and that the sheets are attached to respective adjacent sheets (2, 3, 4, 5) at both side edges.

6. A protective sleeve (1) according to one of the claims 1 to 5, **characterized in that** the protective sleeve (1) is provided at the bottom edges and/or side edges with a fastening means for fastening of the protective sleeve (1) in a sleeve holder (14).

7. A protective sleeve (1) according to claim 6, **characterized in that** the bottom part of the protective sleeve (1) is in the form of a key which is provided with said fastening means in the form of a number of resilient barb-like projections (6).

8. A protective sleeve (1) according to claim 6, **characterized in that** the fastening means is in the form of a number of holes (13).

9. A protective sleeve (1) according to one of the claims 1 to 8, **characterized in that** the protective sleeve (1) is adapted to contain a front cover, a compact disc and a back cover of an ordinary jewel-case in the front pocket (7), the central pocket (8) and the back pocket (9), respectively.
